# EUROPÄISCHE PATENTSCHRIFT

(11) **EP 0 465 710 B1**
(45) Veröffentlichungstag und Bekanntmachung des Hinweises auf die Patenterteilung: **02.03.1994**
(21) Anmeldenummer: 90113345.4
(22) Anmeldetag: 12.07.1990
(51) Int. Cl.: F16P 3/00, B25J 19/06, G05B 19/405

(54) **Vorrichtung zur Sicherheitsüberwachung bei Schutzeinrichtungen mit normaler und überhöhter Sicherheit von mehrachsigen Drehbewegungen durchführenden Maschinen**
Device for the safety monitoring of safety devices, for a normal or elevated safety level of multiaxled machines which execute turning motions
Dispositif de surveillance de la sécurité suivant un taux normal ou élevé des éléments de protection de machines exécutant des mouvements de rotation autour de plusieurs axes

(43) Veröffentlichungstag der Anmeldung: 15.01.1992
(73) Patentinhaber: ELGE ELEKTRONIK-GERÄTEWERK GmbH. & Co., D-91626 Schopfloch (DE)
(72) Erfinder:
(74) Vertreter: Otte, Peter, Dipl.-Ing.

(56) Entgegenhaltungen:
- EP-A- 0 264 350
- DE-A- 3 837 218
- DE-A- 3 900 733
- ELEKTRONIK, Band 37, Nr. 8, 15. April 1988, Seiten 165-168, München, DE; O. VON KITTLITZ: "Kompakt und vielseitig; Preisgünstige Positioniersteuerung für vier Achsen"
- DIE BG, März 1980, Seiten 220-224; W. WIENANDTS: "Sicherheitstechnische Anforderungen an elektronische Steuerungen"

## Beschreibung

Die Erfindung geht aus von einer Vorrichtung zur Sicherheitsüberwachung bei Schutzeinrichtungen nach dem Oberbegriff des Anspruchs 1.

Eine bekannte Kriech- und Drehbewegungsüberwachung bei Schutzeinrichtungen mit normaler oder erhöhter Sicherheit dieser Art (DE-OS 38 37 218) definiert drei verschiedene Funktionsarten bei der Sicherheitsüberwachung, um so den verschiedenen Sicherheitsaspekten einer Zielanlage entsprechen zu können. Diese drei Funktionsarten sind so definiert, daß
- eine Stillstandsüberwachung als Sonderbetrieb ohne Bewegung durchgeführt wird, wobei der Betriebszustand der Zielanlage einer geöffneten Gefahrenzone (geöffnete Schutzhaube oder Schutzgitter) entspricht;
- daß ferner eine Stillstandsüberwachung als Sonderbetrieb mit Bewegung bei ebenfalls geöffneter Gefahrenzone und manueller Anforderung zur Zulassung einer limitierten Kriechbewegung der Zielanlage realisiert werden kann und schließlich
- eine Drehbewegungsüberwachung als Normalbetrieb bei geschlossener Gefahrenzone durchgeführt wird, wobei eine innerhalb vorgegebener Grenzen limitierte Drehbewegung der Zielanlage erlaubt ist.

Dabei unterliegt die Überwachung der Betriebszustände sowie der Drehbewegungen einer absoluten Funktionssicherheit entsprechend einer jeweils zweifachen Überwachung in einem Gerät mit der Folge, daß bei auftretenden Fehlern grundsätzlich eine Abschaltung der Antriebsenergie durchgeführt wird.

Es ist dabei möglich, die Drehbewegung einer Achse über zwei verschiedene Encodersysteme abzutasten, wobei beide mittels entsprechender Drehgeber gewonnene Signale in Form von Rechteckimpulsen entsprechenden Eingängen der Überwachungsschaltung zugeführt werden, so daß die Signale der Drehbewegung über zwei voneinander unabhängig arbeitende Meßsysteme bearbeitet und auf ihre limitierten Werte redundant ausgewertet werden können.

Ferner ist es durch geeignetes Takten der Meßsysteme über das aufbereitete Signal der Drehbewegung möglich, eine sichere Überwachung der Funktion der Meßsysteme sowie der Encoder selbst zu realisieren. Bei Ausfall eines der Encoder sowie eines fehlerhaften Meßsystems meldet das Gerät den so erfaßten Störzustand durch sofortige Abschaltung der Antriebsenergie.

Weitere Sicherheitsaspekte bei der bekannten Einrichtung liegen darin, daß im Störfall die Antriebsenergie über zwei unabhängig arbeitende Sicherheitsausgangsrelais abgeschaltet wird, wobei auch eine Funktionserfassung der Sicherheitsausgangsrelais ohne Abschaltung der Antriebsenergie möglich ist in Verbindung mit verschiedenen Testmoden, die durch die Meß- oder Überwachungssysteme durchgeführt werden. Beispielsweise kann eine Deaktivierung der Treiberstufe für die Sicherheitsausgangsrelais eingeleitet werden, deren nunmehr spannungsloser Zustand an eine nachfolgende Kontrollelektronik gemeldet wird. Ergeben sich in beiden Schaltungen die gleichen Signale, dann wird ein solcher Testmodus gegenseitig automatisch quittiert, wobei eine Deaktivierung der Sicherheitsausgangsrelaissysteme ohne Abschaltung der Antriebsenergie erfolgen kann, da spezielle Kondensatorspeicherschaltungen vorgesehen sind, die innerhalb der Rückfallzeit aktiviert werden.

Allgemein ist es bekannt, Arbeitsmaschinen der verschiedenen Art, insbesondere Automaten Schutzschaltungen zuzuordnen bzw. die Steuerung der Maschinen jedenfalls so auszulegen, daß die Arbeitsbewegung der Maschine soweit möglich umgehend gestoppt wird, wenn sich für die Bedienungsperson ein gefährlicher Zustand ergibt. Hierzu gehören auch solche Maschinen, die sich überhaupt nur dann auslösen, also in Betrieb nehmen lassen, wenn eine Schutzhaube geschlossen ist bzw. die Bedienungspersons mit beiden Händen bestimmte Grifftasten bedient.

Anders als bei diesen bekannten Schutzeinrichtungen stellen komplexe prozeßgesteuerte Produktionsmaschinen, beispielsweise sogenannte CNC-gesteuerte Anlagen (CNC = Computerized Numerical Control = Rechnergestützte numerische Steuerung) sowie Industrieroboter besonders hohe Anforderungen an die Arbeitssicherheit, beispielsweise wenn sich Personen beim Sonderbetrieb im Gefahrenbereich der Maschine befinden.

So ist eine hardwaremäßige Sicherheitsabschaltung für Maschinen bekannt, die in Verbindung mit der Systemsteuerung arbeitet und einen sicheren Zustand in bestimmten Betriebsarten gewährleistet. Hier können aber auch Nachteile auftreten wie beispielsweise unnötige Ladezeit der Netzteile, Positionierungsverluste durch Datenfehler u. dgl., so daß hier weitere Lösungsansätze notwendig werden.

Der Erfindung liegt daher, ausgehend von der Kriech- und Drehüberwachungseinrichtung der eingangs genannten Art die Aufgabe zugrunde, eine allen Sicherheitsansprüchen gerecht werdende Sicherheitsüberwachungseinrichtung so auszugestalten, daß auch komplexe Maschinen, speziell die bekannten Halb- sowie Vollautomaten, bei denen immer mehr als nur ein zu überwachendes Antriebsaggregat triebsaggregat vorhanden ist, in eine einfach aufgebaute und je nach den Ansprüchen bzw. Antrieben erweiterungsfähige Gesamtüberwachung einbezogen werden können.

### Vorteile der Erfindung

Die Erfindung löst diese Aufgabe mit den kennzeichnenden Merkmalen des Anspruchs 1 und hat den Vorteil, daß die gesamte Kriech- und Drehbewegungsüberwachung von mehrachsig Drehbewegungen durchführenden Maschinen mit einem Grundgerät und einer entsprechenden Anzahl von Erweiterungseinheiten großflächig überwacht werden kann, ohne daß eine Berücksichtigung der Spezifizierung einzelner Maschinenhersteller erforderlich ist. Die erfindungsgemäße Überwachungseinrichtung ist daher universell anwendbar und deshalb besonders kostengünstig, weil unter Zugrundelegung eines Grundgeräts bei einer gegebenen, auch sehr komplexen Maschine zunächst ein erster und ein zweiter Achskreis jeweils zweikanalig auf Kriech- und Drehbewegungen überwacht werden können, wobei die Überwachung komplett unabhängig voneinander arbeitet, d. h. für jeden Achskreis sind zwei Überwachungsmeßsysteme vorgesehen, so daß ein Grundgerät in einer ersten sogenannten Kontrolleinheit insgesamt vier solcher Überwachungsmeßsysteme aufweist, die dann durch zusätzliche Ergänzungsüberwachungseinheiten um jeweils zwei weitere Achskreise mit jeweils zweikanaliger Überwachung, also um insgesamt vier Überwachungsmeßsysteme ergänzt werden.

Dabei ist das Grundgerät so ausgebildet, daß es in eine Stromversorgungseinheit mit eigenem Gehäuse und in die schon erwähnte Kontrolleinheit unterteilt ist, die ebenfalls ein eigenes Teilgehäuse umfaßt und an die Stromversorgungseinheit durch eine Steckverbindung von grundsätzlich beliebiger Art angeschlossen ist. Trennt man diese Steckverbindung auf, dann kann man zwischen die jeweils nur einmal vorhandene Stromversorgungseinheit und die jeweils nur einmal vorhandene Kontrolleinheit, die dann gleichzeitig auch immer notwendigerweise die letzte Abschlußeinheit bildet, zusätzliche Überwachungsergänzungseinheiten einschieben, wobei die elektrische Verbindung jeweils durch entsprechende Steckkontakte erfolgt, die so ausgebildet sind, daß kein Irrtum durch falsche Verbindungen möglich ist. Es versteht sich, daß der weiter oben als sogenannte Stromversorgungseinheit bezeichnete Teilschaltungsbereich des Grundgerätes nicht nur lediglich der Stromversorgung dient, sondern fundamentale Aufgaben der Sicherheitsüberwachung wahrnimmt, die nur einmal realisiert zu werden brauchen, d.h. die von der stromversorgungseinheit erfaßte Summe der Kriech- und Drehbewegungsauswertungen wird über ein zugeordnetes Sicherheitsausgangsrelaissystem einer nachfolgenden, extern angeschlossenen Steuerung gemeldet; ferner werden die globalen Signale von Überwachungskreisen zur Bestimmung einzelner Betriebszustände, die bei einer gegebenen Maschine jeweils nur einmal auftreten, entsprechend bearbeitet und gelangen von dieser Stromversorgungseinheit zu den nachfolgenden einzelnen Kriech- und Drehbewegungs-Überwachungseinheiten, so daß an den Steckkontakten, beginnend mit der Stromversorgungseinheit über die jeweils zwischengesteckten Überwachungseinheiten bis zur jeweils die Abschlußschaltung bildenden Kontrolleinheit eine gegenseitige Kommunikation in beiden Richtungen erfolgt. Hierbei sind die einzelnen Kriech- und Drehbewegungsüberwachungs-Einheiten mechanisch (über die Steckkontakte) und elektrisch sozusagen hintereinander geschaltet, arbeiten aber parallel auf Verbindungsleitungen, die zur Stromversorgungseinheit führen, so daß jedes Überwachungs-Meßsystem jeder Überwachungseinheit in der Lage ist, die Stromversorgungseinheit auszulösen und die Maschine insgesamt stillzusetzen.

Für den Benutzer ergibt sich so der Vorteil, daß jeweils pro zu überwachender Maschine oder Maschinenanlage stets nur ein Grundgerät (Stromversorgungseinheit, Kontrolleinheit) vorzusehen ist und dann je nach der Komplexität der Maschine eine entsprechende Anzahl von Überwachungseinheiten hinzugefügt, genauer gesagt bei der Montage durch Zwischenstecken aneinandergereiht werden müssen, wodurch man zu einem allen Anforderungen der Schutzeinrichtung genügenden, sämtliche Achskreise doppelt, also redundant überwachenden Sicherheitssystem gelangt. Dabei überwacht jede zusätzliche Einheit, also die Kontrolleinheit sowohl als auch die ergänzend einzeln steckbaren und dadurch aneinander anreihbaren Überwachungseinheiten unabhängig jeweils zwei Achskreise und verfügt daher wegen der erforderlichen Redundanz über insgesamt jeweils vier Überwachungs-Meßsysteme. Jede der Einheiten kann über eigene unabhängige Parameter festgelegt werden und dient der Kriech- bzw. Drehbewegungsauswertung.

Vorgesehen ist dann für jeden Achskreis ein erstes relevantes Signal, welches proportional zur Drehbewegung verläuft und mittels eines eigenen Bewegungssensors oder Encoders erfaßt wird, sowie ein zweites relevantes und insofern redundantes Signal, welches entweder ebenfalls über einen eigenen Encoder erfaßt werden kann, der dann in einem anderen Frequenzbereich arbeitet, oder es wird mit Vorteil ein das erste relevante Drehbewegungs-Signal bestätigendes zusätzliches, hierdurch die redundante Funktion der Achskreise sicherstellendes Signal ermittelt, und zwar indem aus dem jeweiligen Leistungsteil des Achskreises ein Ansteuersignal abgeleitet wird, welches als High-Signal oder Low-Signal ("1" bzw. "0") angibt, ob der Achsantriebsmotor angesteuert ist. Diese Möglichkeit ergibt sich alternativ zu der ebenfalls ins Auge gefaßten Möglichkeit, separat einen zweiten Encoder für die Drehbewegungserfassung pro Achse vorzusehen.

Ein weiterer Vorteil der Erfindung besteht noch darin, daß die einzelnen Überwachungseinheiten jeweils über drei verschiedene Funktionsarten verfügen, die so, wie dies in der schon erwähnten DE-OS 38 37 218 angegeben ist, über den entsprechenden äußeren Betriebszustand der Zielanlage (z. B. Drehmaschinenautomat mit einer Vielzahl von Achskreisen) extern, und zwar durch äußeren Eingriff der jeweiligen Bedienungsperson, angewählt werden können.

Schließlich ist von Vorteil, daß der mechanische Aufbau der erwähnten einzelnen Einheiten in ihren jeweiligen Teilgehäusen in einheitlicher Gehäusegestaltung in drahtloser Steckmodulmontage vorgenommen wird, wobei das Stecksystem konstruktiv so ausgebildet ist, daß ein falsches Anreihen der Einheiten ausgeschlossen ist und im übrigen jede insofern mittlere Ergänzungs-Überwachungseinheit auf ihrer jeweils freien Seite, wenn an dieser keine weiteren Ergänzungs-Überwachungseinheiten angereiht werden sollen, des Abschlusses durch die zum Grundgerät gehörende Kontrolleinheit bedarf, damit die Funktion dieses Überwachungssystems gewährleistet ist.

Die jeweiligen Gehäuseabmessungen sind so getroffen, daß eine genormte Tragschienenlagerung möglich ist.

Durch die in den Unteransprüchen aufgeführten Maßnahmen sind weitere vorteilhafte Verbesserungen und Ausgestaltungen der Erfindung möglich.

### Zeichnung

Ausführungsbeispiele der Erfindung sind in der Zeichnung dargestellt und werden in der nachfolgenden Beschreibung näher erläutert. Es zeigen:
- Fig. 1: ein erstes Blockschaltbild des Grundgeräts vorliegender Erfindung mit der Möglichkeit von zwei getrennten Achskreisüberwachungen, externem Überwachungskreis und schematischer Darstellung der Zielanlage;
- Fig. 2: ein zweites Blockschaltbild in Form eines durch lediglich eine zusätzliche Überwachungseinheit ergänzten Grundgeräts, so daß sich insgesamt vier voneinander unabhängige Achskreisüberwachungen ergeben;
- Fig. 3: schematisiert eine mögliche Ausführungsform eines Verdrahtunsbeispiels für die Stromversorgungseinheit EBKS im Grundgerät mit eigenem Teilgehäuse und rechtsseitigen Anschlußbuchsen für weitere Einheiten;
- Fig. 4: das Verdrahtungsbeispiel der zum Grundgerät gehörenden Kontrolleinheit EBKC mit linksseitigen Anschlußmöglichkeiten für weitere vorhandene Einheiten und
- Fig. 5: eine das Verdrahtungsbeispiel der Figuren 3 und 4 abschließende weitere Verdrahtungsform einer zwischensteckbaren Überwachungseinheit mit beidseitigen Anschlußmöglichkeiten in Form von Steckern bzw. Buchsen, während die
- Figuren 6 und 7: die äußere Gehäusedraufsicht von vorn und hinten einmal auf das Grundgerät und zum anderen (Fig. 7) auf das Grundgerät mit einer ergänzenden Überwachungseinheit zeigen; schließlich läßt sich den
- Figuren 8 und 9: im größeren Detail und zum besseren Verständnis der Erfindung eine mögliche Ausführungsform lediglich eines Überwachungs-Meßsystems entnehmen (Fig. 9), während die Fig. 8 eine mögliche Ausführungsform eines Ausgangsschaltungsbereichs der Stromversorgungseinheit in Verbindung mit der dynamischen Ansteuerung von Sicherheits-Abschaltrelais bzw. -schütze im Bereich der Stromversorgung des Zielanlagen-Antriebs angibt.

### Beschreibung der Ausführungsbeispiele

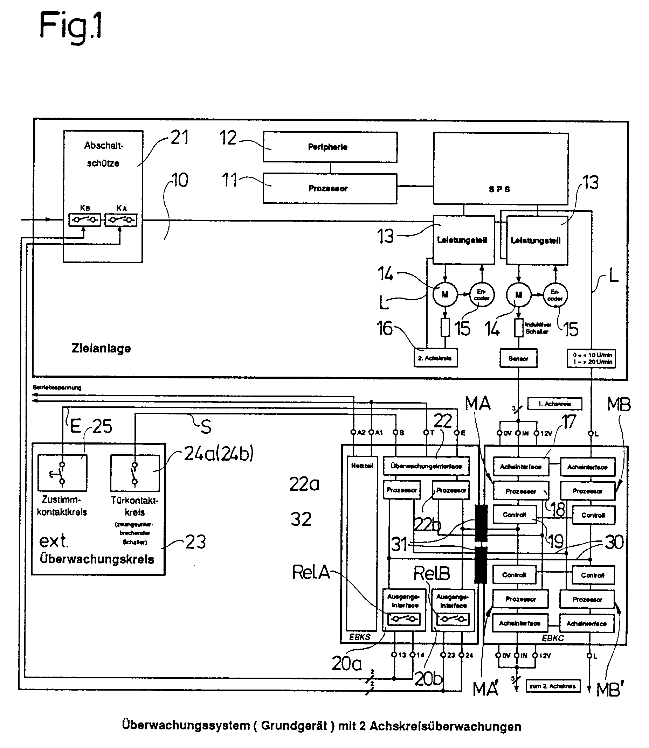

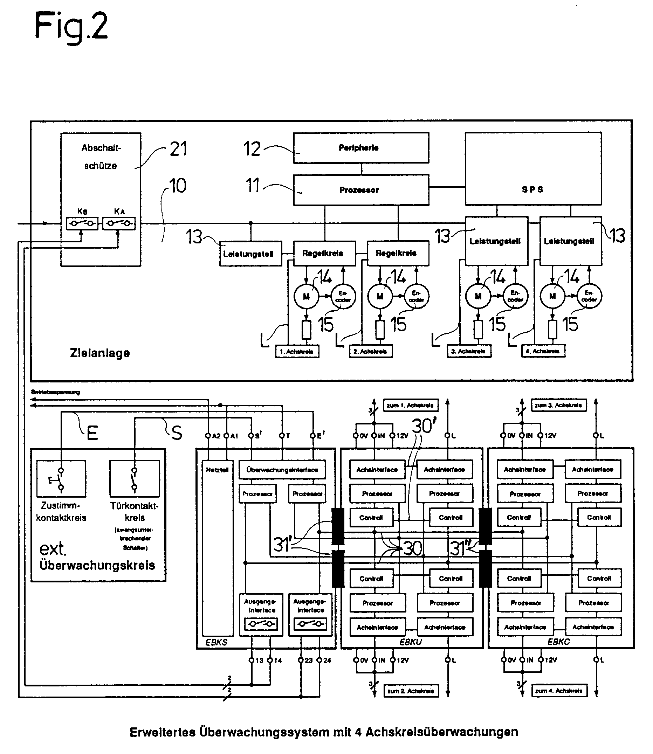

Entsprechend den Blockschaltbildern der Figuren 1 und 2 ist die zu überwachende Maschine als Zielanlage mit 10 bzw. 10' bezeichnet; sie gehört nicht zum Bereich der Überwachungsschaltung und besteht, ohne hierauf genauer einzugehen, aus einem geeigneten Prozessor oder Steuerteil 11, einer dem Steuerteil 11 zugeordneten Peripherie 12 und vom Prozessor angesteuerte Leistungsteile 13, welche , auch durch Rückmeldung, einen geregelten Betrieb der vom Leistungsteil jeweils angesteuerten Bewegungseinheit 14, beispielsweise einen Elektromotor möglich machen.

Die Elektromotoren, deren jeweilige Ausgangsdrehbewegungen bei dem dargestellten Ausführungsbeispiel der Erfindung überwacht werden sollen und die beispielsweise die Antriebsmotoren der Spindeln einer Drehmaschine, einer Fräse o. dgl. sein können, sind jeweils mit 14 bezeichnet.

Grundsätzlich sind Art und Aufbau der Zielanlage beliebig; dabei ist bei diesen für jeden Achskreis ein Leistungsteil 13 vorgesehen, dessen Leistungs-Stromzuführung über einen Abschaltschutzbereich 21 erfolgt, der vom Ausgangskreis der zum Grundgerät gehörenden Stromversorgungseinheit beaufschlagt ist. Der Abschaltschutzbereich 21 umfaßt zwei in Reihe geschaltete Abschaltschütze KB und KA, die jeweils von eigenen Ausgangs-Interfaceschaltungen 20a, 20b der Stromversorgungseinheit EBKS beaufschlagt sind.

Zur Überwachung der Bewegung oder Drehbewegung jedes Achskreises können zwei verschiedene, aber auch unterschiedliche Bewegungssensoren vorgesehen sein, die auch als Encoder bezeichnet werden; entsprechend einem bevorzugten Ausführungsbeispiel vorliegender Erfindung ist jedoch jedem Achskreis, also jeder Spindel beispielsweise nur ein äußerer Drehbewegungsgeber 15 zugeordnet und in den Figuren 1 und 2 als Signal IN proportional zur Drehbewegung bezeichnet, während das die redundante Funktion der Achskreise sicherstellende Betätigungssignal als Signal L vom jeweiligen Leistungsteil 13 für den entsprechenden Achskreis abgeleitet wird und so ebenfalls zum jeweiligen Achskreis-Funktionsblock 16 gelangt.

Aus der Darstellung der Figuren 1 und 2 erkennt man, daß jede Kontroll- bzw. Überwachungseinheit zwei unabhängige Achskreis-Signal-Daten verarbeiten kann, so daß entsprechend der Fig. 1 ein aus einem Grundgerät bestehendes Überwachungssystem zwei separate Achskreisüberwachungen, wie angegeben, durchführen kann.

Die verwendeten Encoder können die von der jeweiligen Ausgangswelle geleistete Drehbewegung in durchaus beliebiger leise abtasten, beispielsweise also optische, induktive oder kapazitive Näherungsschalter oder Geber sein, wobei auch Hall-Generatoren, inkrementale Drehgeber, Magnetfeldplatten-Annäherungsschalter u.dgl. verwendet werden können. Üblich kann die Anordnung einer Codier- oder Schlitzplatte sein, die optisch abgetastet wird, während das redundante Signal L aus dem jeweiligen Leistungsteil bei einer Drehbewegung ein hochliegendes, also 1-Signal und bei Stillstand ein 0-Signal sein kann.

Die beiden relevanten Ausgangssignale pro bewegter Achse gelangen über ihre entsprechenden Geräteeingänge IN bzw. L zum zugeordneten Überwachungs-Meßsystem MA, MB für den ersten Achskreis bzw. MA', MB' für den zweiten Achskreis, wenn man zunächst bei Fig. 1 verbleibt.

Jedes der Meßsysteme wertet die eingehenden Drehbewegungssignale IN bzw. L auf ihre limitierten vorgegebenen Werte aus und umfaßt, was im folgenden nur einmal mit Bezug auf die Kontrolleinheit EBKC der Fig.1 erläutert wird, für jedes relevante Drehsignal ein Achsinterface 17, eine nachgeschaltete Prozessoreinheit 18 und eine sich daran anschließende Steuer- bzw. Kontrollschaltung 19, deren jeweilige Ausgangssignale (in jeder Kontrolleinheit EBKC bzw. ergänzende Überwachungseinheit EBKU befinden sich demnach vier Kontrollschaltungen) über Querverbindungsleitungen 30 und über die schon erwähnten Steckkontaktverbindungen 31 zu den Ausgangs-Interfaceschaltungen 20a, 20b gelangen, die der Abschalt-Schützansteuerung dienen.

Die allen gemeinsame Stromversorgungseinheit EBKS verfügt ergänzend zu den Ausgangs-Interface-Schaltungen 20a, 20b neben einem Netzteil 32 zur allgemeinen Stromversorgung der angeschlossenen Einheiten über die jeweiligen Steckkontakte über ein gemeinsames Überwachungs-Interface 22, welches über zwischengeschaltete Prozessorschaltungen 22a, 22b und die schon erwähnten Querverbindungsleitungen über die Steckkontakte 31 auf die Steuer- und Kontrolleinheiten (nunmehr in Gegenrichtung) arbeitet, damit diese auch auf die Signale eines der Zielanlage noch zugeordneten externen Überwachungskreises 23 reagieren und in ihrem Funktionsablauf, insbesondere bei der Umsetzung der verschiedenen Funktionsarten, auf die noch eingegangen wird, entsprechend abgestimmt arbeiten können.

Der externe Überwachungskreis 23 umfaßt einen bzw. vorzugsweise zwei getrennte Türkontaktkreise 24a, 24b sowie einen Zustimmkontaktkreis 25, der als zwangsunterbrechender Schalter wieder öffnet, wenn seine manuelle Betätigung durch eine Bedienungsperson beendet wird, also bevorzugt als Taster ausgebildet sein kann.

Bei Schutzeinrichtungen mit normaler Sicherheit enthält der Überwachungskreis 23 nur einen Türkontaktkreis (wie in Fig. 1 dargestellt) in Form eines zwangsunterbrechenden Schalters, dessen Ausgangssignal S dem Eingang S' des Überwachungsinterface 22 zugeführt ist.

Das Signal E des Zustimm-Kontaktkreises (zwangsunterbrechende Schalter 25) gelangt zum Eingang E' des Überwachungsinterface.

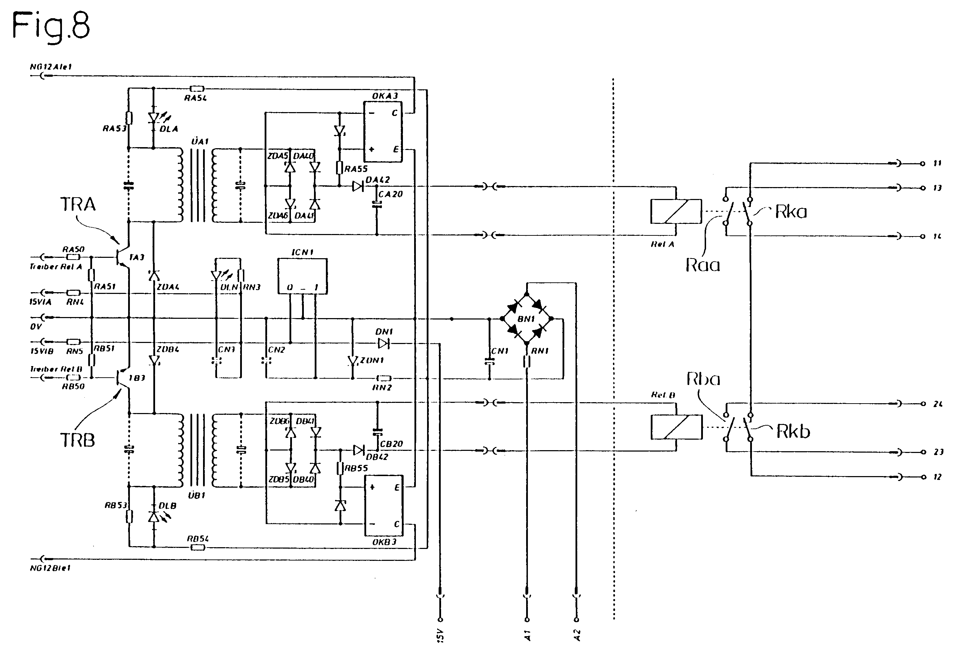

Hinsichtlich der Ausgangskreis-Steuerung durch die Stromversorgungseinheit EBKS ist noch zu erwähnen, daß den Ausgangsinterface-Schaltungen 20a, 20b Ausgangsschaltrelais Rel A und Rel B zugeordnet sind, die die Reihenschaltung der Abschaltschütze jeweils zu den Leistungsteilen 13 der Zielanlage ansteuern (siehe hier auch Fig. 8). Die Ausgangsschaltrelais weisen jeweils einen Ruhekontakt Rka, Rkb sowie eine entsprechende Anzahl von Arbeitskontakten Raa und Rab auf. Diese sowie weitere Ruhekontakte der angesteuerten Abschaltschütze KA und KB können einer Einschalt-/Funktionskontrolle dienen und sind zu den jeweils zugeordneten Arbeitskontakten zwangsgeführt, während die Arbeitskontaktkreise der Abschaltung der Antriebsenergie dienen und mit dem Ruhekontakt zwangsgeführt sind.

Gegenüber dem Blockschaltbild der Fig. 1 zeigt das Blockschaltbild der Fig. 2 ein erweitertes Überwachungssystem mit insgesamt vier getrennten Achskreisüberwachungen bei einer gegebenen Zielanlage, mit dem einzigen Unterschied, daß bei Beibehaltung der zum Grundgerät gehörenden Stromversorgungseinheit EBKS sowie der Abschluß-Kontrolleinheit EBKC zwischen diesen beiden durch Auftrennung ihrer jeweils zugeordneten Steckkontakte 31 bei dem Ausführungsbeispiel der Fig. 2 lediglich eine zusätzliche Ergänzungsüberwachungseinheit EBKU zwischengesteckt ist, wobei es sich versteht, daß hier im Grunde eine beliebige Anzahl von zusätzlichen Ergänzungsüberwachungseinheiten EBKU durch einfaches Zwischenstecken noch angereiht werden können, wohlgemerkt immer so, daß der Abschluß von einer EBKC-Kontrolleinheit gebildet wird.

Zu diesem Zweck weisen die Ergänzungsüberwachungseinheiten EBKU beidseitig Steckkontaktbereiche 31' und 31'' auf, die zur sicheren Orientierung und zur Vermeidung von Fehlschaltungen beispielsweise so ausgebildet sein können, daß auf der einen Seite jeweils Stecker und auf der anderen Seite jeweils Buchsen vorgesehen sind, so daß die Anreihung nur in einer gegebenen Art und Weise vorgenommen werden kann.

Bemerkenswert ist, daß sich durch dieses Aneinanderstecken der verschiedenen anreihbaren Überwachungseinheiten (Ergänzungsüberwachungseinheiten und Kontrolleinheit) für die Drehbewegung über die Steckkontakte jeweils die Querverbindungsleitungen 30 verlängern, die durch jedes Gerät geführt sind, so daß im Endeffekt beispielsweise die jeweiligen Kontrollschaltungen 19 jeder zusätzlichen Einheit (und in jeder Einheit sind vier Kontrollschaltungen, wie erkennbar) mit ihren Ausgängen parallel an die jeweils zugeordnete Querverbindungsleitung 30 angeschlossen sind. Es können dann noch interne Querverbindungsleitungen 30' beispielsweise zwischen den jeweiligen Achsinterface oder den Kontrollschaltungen vorgesehen sein, damit diese ihre Daten austauschen können oder, da sie jeweils zu einem Achskreis gehören, bei bestimmten Testmoden ein gegenseitiges Quittieren möglich ist.

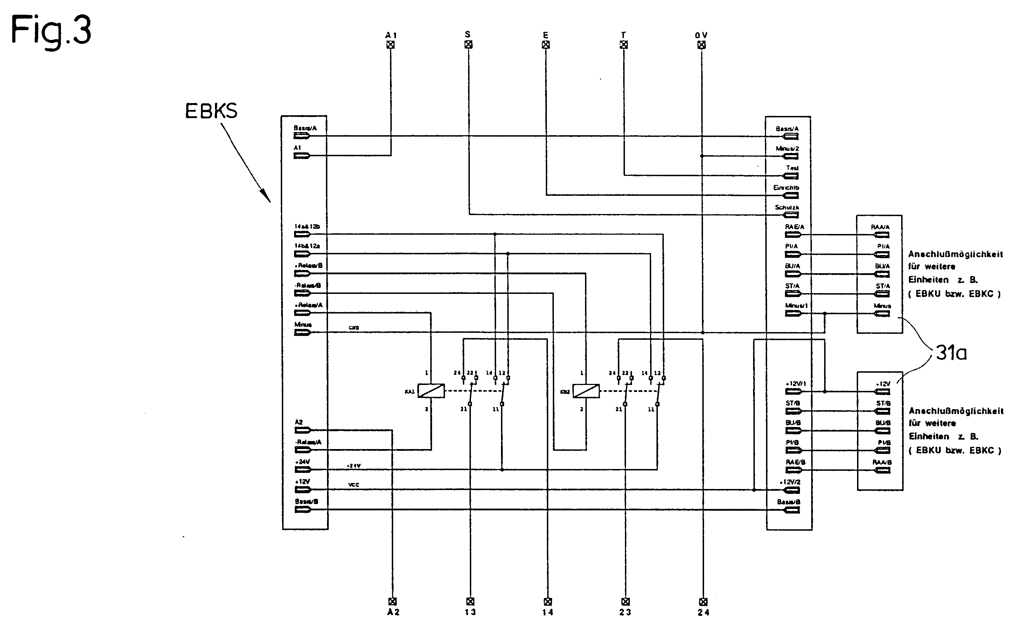

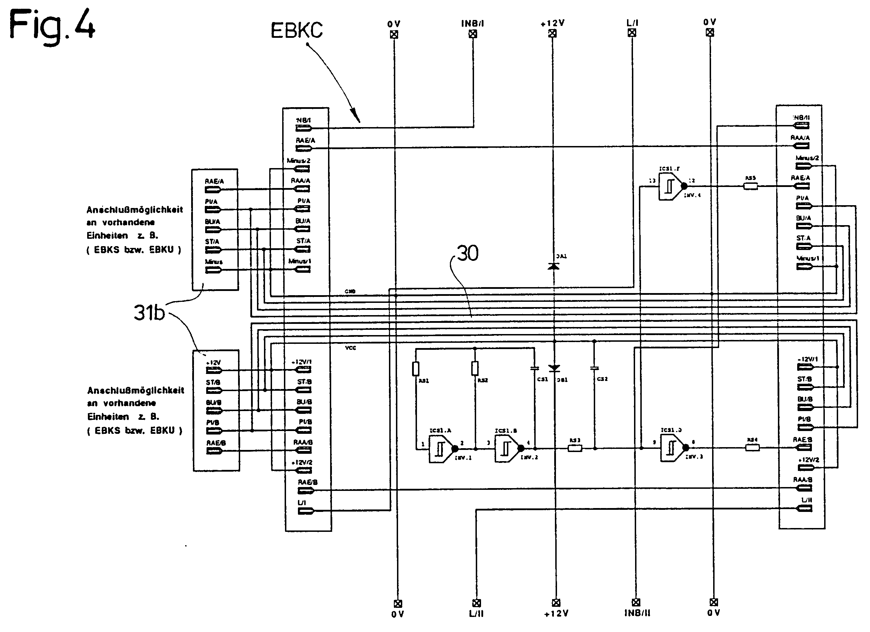

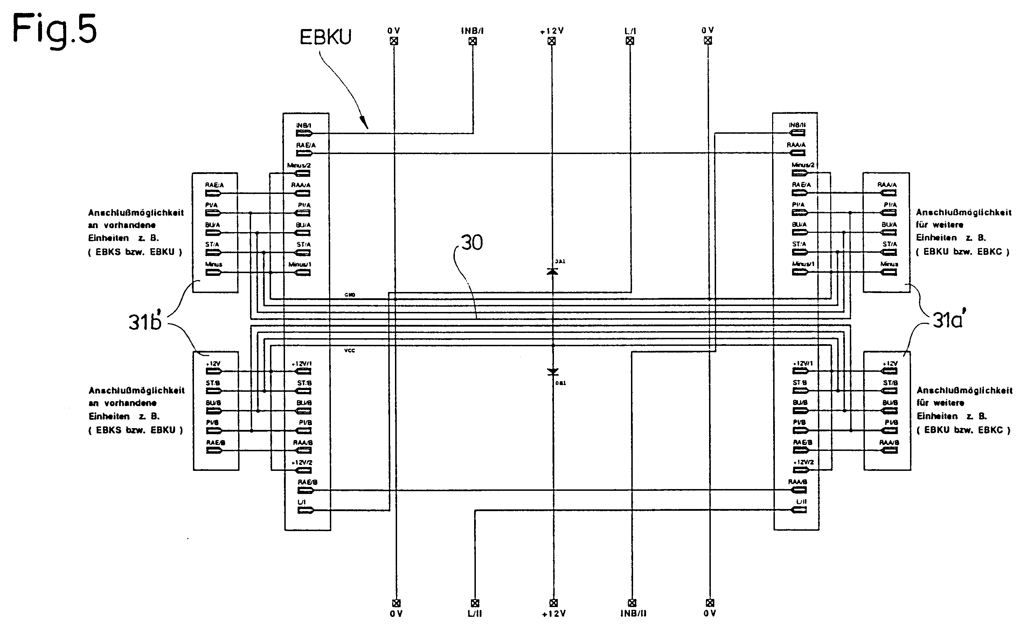

Die Darstellung der Figuren 3, 4 und 5, die zusammengehören, zeigen nochmals im größeren Detail diese grundsätzliche Konzeption vorliegender Erfindung - Fig.3 stellt die, wenn man bei der Darstellung der Blockschaltbilder bleibt, linke, abschließende Stromversorgungseinheit EBKS als Teilgehäuse des Grundgerätes dar, beispielsweise mit einer auf der rechten Seite des Gehäuses angeordneten Steckbuchsenleiste 31a, während die ebenfalls zum Grundgerät gehörende Kontrolleinheit EBKC der Fig. 4 entsprechend auf der linken Seite über eine Steckzapfenleiste 31b verfügt. In der Darstellung der Fig. 4 erkennt man auch gut die verschiedenen Querverbindungsleitungen 30, die durchgehend zu den äußeren Kontaktanschlüssen geführt sind, wobei gerade die in Fig. 5 noch gezeigte eine Ergänzungsüberwachungseinheit EBKU deutlich macht, daß die Querverbindungsleitungen 30 tatsächlich vom linken zum rechten Steckkontaktanschluß durchlaufen und die jeweiligen internen Schaltungsteile jeder Einheit an den durchlaufenden Leitungen Anzapfungen bilden und so in der Lage sind, schließlich bis zu den Prozessor- und Ausgangsinterface-Schaltungen der Stromversorgungseinheit EBKS durchgeschaltet und dort verarbeitet zu werden. Dementsprechend weist dann die EBKU-Ergänzungsüberwachungseinheit der Fig. 5, wenn man die bisherige Vereinbarung weiter beibehält, auf der linken Seite der Darstellung eine Steckzapfenleiste 31b' und auf der rechten Seite eine Steckbuchsenleiste 31a' auf. Es versteht sich, daß die Figuren 3, 4 und 5 lediglich schematisch die hier relevanten Verbindungsleitungsbereiche zeigen und Einzelschaltungen nicht aufgeführt sind. Man erkennt aus der Darstellung der Fig.4 im übrigen auch, daß es unbedingt der Abschlußschaltung der Kontrolleinheit EBKC jeweils (vereinbarungsgemäß) auf der rechten Seite bedarf, damit an dieser Stelle keine offenen Buchsen vorhanden sind. Erst die Schaltung der Kontrolleinheit EBKC, die die Querverbindungsleitungen 30 rückführt und ordnungsgemädß abschließt, ermöglicht überhaupt den Betrieb des gesamten, gegebenenfalls erweiterten Überwachungssystems.

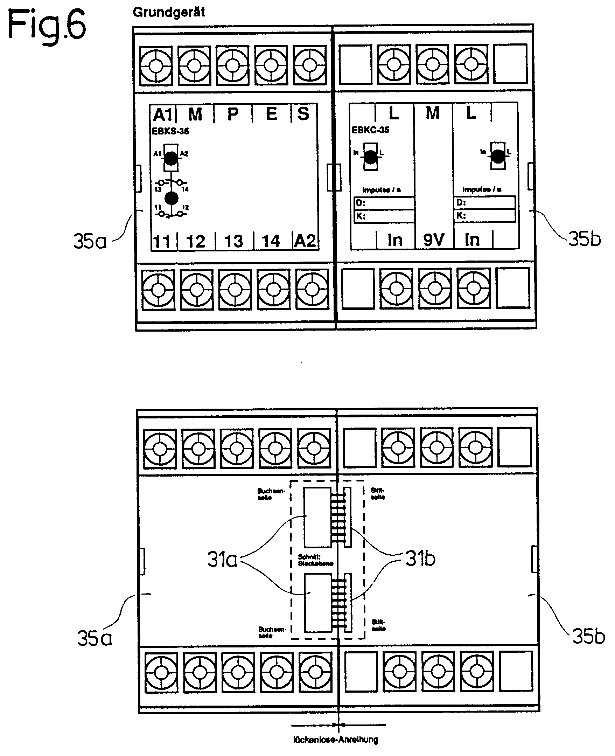

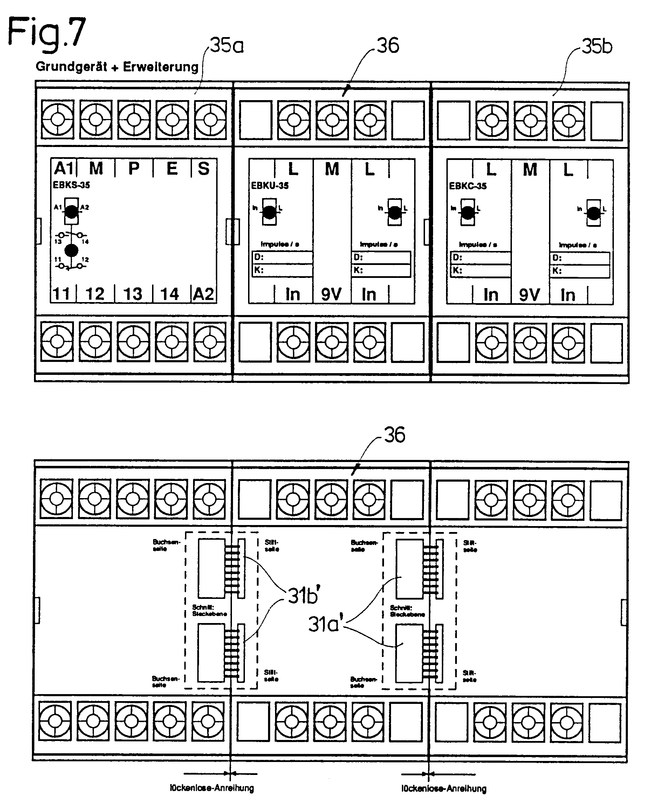

Die Figuren 6 und 7 zeigen praktische Ausführungsformen von äußeren Gehäuseaspekten und die Möglichkeiten ihrer Aneinanderreihung, wobei die Fig. 6 oben in Draufsicht die Anschlußseite des Grundgeräts mit den beiden Teilgehäusen 35a für die Stromversorgungseinheit 35b für die abschließende Kontrolleinheit darstellt. In Fig. 6 unten ist die Rückseite oder Steckkontaktseite der beiden lückenlos aneinander gereihten Teilgehäuse gezeigt; man erkennt die Buchsenleiste 31a des EBKS-Teilgehäuses 35a für die stromversorgungseinheit und die Stiftseite 31b der angeschlossenen Kontrolleinheit. Die Fig. 7 zeigt, wie sich in der um eine EBKU-Überwachungseinheit die Aneinanderreihung der Teilgehäuse ergibt; in Fig. 7 oben ist wieder die Draufsicht der Anschlußseite gezeigt, während die Fig. 7 unten die lückenlose Anreihung mit den jeweils einander zugeordneten Buchsen- und Stiftkontakten darstellt. Das zusätzliche Teilgehäuse der Ergänzungseinheit EBKU ist mit 36 bezeichnet. Durch die mechanische Anreihung bzw. Zwischenschaltung jeweils einer Ergänzungsüberwachungseinheit wird die Kriech- und Drehbewegungsüberwachung um jeweils zusätzliche zwei Achskreise erweitert, wie weiter vorn schon erläutert.

Die Erfindung ermöglicht die elektronische Kriech- und Drehbewegungsüberwachung bei Schutzeinrichtungen für Bewegung und Durchführung der Arbeitsmaschine mit normaler oder erhöhter Sicherheit, wobei das Überwachungssystem über drei verschiedene Funktionsarten verfügt, die über den entsprechenden Betriebszustand der Zielanlage realisierbar und durch entsprechende Beeinflussung des Überwachungskreises durch das Bedienungspersonal insofern auch extern am Gerät anwählbar sind, d. h. also sobald sich entsprechende Personen beim Betrieb der Zielanlage in deren Gefahrenbereich befinden.

### Funktion Stillstandsüberwachung (Sonderbetrieb ohne Bewegung)

Beim Öffnen einer Schutzhaube bzw. eines Schutzgitters an der zu übewachenden Maschine wird durch entsprechende Signalansteuerung über dem Überwachungskreis (zwangsgesteuerte Türkontakte 24a, 24b) die Sicherheitsschaltung auf die Funktion Stillstandsüberwachung aktiviert. Bei geringster Bewegung der zu überwachenden Achse oder beim Fehlen eines Aktivierungs- bzw. Funktionssignales führt dies zu einer sofortigen Abschaltung der Antriebsenergie über die Abschaltschütze bis zur Fehlerbehebung.

### Funktion Stillstandsüberwachung (Sonderbetrieb mit Bewegung)

Durch Betätigung der Zustimmtaste (zwangsunterbrechender Schalter 25 im Überwachungskreis) wird durch eine entsprechende Signalansteuerung die Sicherheitsschaltung auf die Funktion Stillstandsüberwachung mit zulässiger Kriechbewegung (limitierte Drehbewegung) aktiviert. Diese Sonderfunktion ist nur bei geöffneter Schutzhaube bzw. Schutzgitter möglich. Eine in diesem Fall erlaubte Bewegung der zu überwachenden Achse ist dadurch auf einen limitierten Wert festgesetzt und bei Überschreiten dieses Grenzwertes oder bei Fehlen eines Aktivierungs- bzw. Funktionssignales ergibt sich ebenfalls eine sofortige Abschaltung der Antriebsenergie bis zur Fehlerbehebung.

### Funktion Drehbewegungsüberwachung (Normalbetrieb)

Beim Schließen der Schutzhaube bzw. des Schutzgitters wird durch entsprechende Signalansteuerung vom Überwachungskreis 23 die Sicherheitsschaltung 16 auf die Funktion Drehbewegungsüberwachung aktiviert. Eine Bewegung der zu überwachenden Achse ist dadurch auf einer Maximalwert festgesetzt und führt bei Überschreiten dieser maximalen Drehbewegung oder bei Fehlen eines Aktivierungs- bzw. Funktionssignals zur sofortigen Abschaltung der Antriebsenergie, wiederum bis zur Fehlerbehebung. Dabei können die Parameter der limitierten Kriechbewegund entsprechend der Funktionsart Kriechbewegungsüberwachung sowie der Drehbewegung entsprechend Funktionsart Drehbewegungsüberwachung entsprechend bei Installation oder auch bei Wartung geändert werden.

Eine Ausgestaltung der Erfindung besteht darin, daß auch bei der Festlegung der einzelnen Funktionsarten durch den Betriebszustand der Zielanlage (Schutzhaube geöffnet; Schutzhaube geöffnet mit gedrücktem Zustimmkontakt; Schutzhaube geschlossen) die dazu nötigen Signale über die jeweils zwei voneinander unabhängig arbeitende Überwachungs-Meßsysteme erarbeitet werden. Immer bei Signaländerung durch den Betriebszustand der Zielanlage an Anschlußklemmen S' (oder auch E') des Überwachungsinterface 22 wird ein Testmodus aktiviert, wodurch die beiden Meßsysteme gegenseitig getaktet und auf ihre Funktion geprüft werden. Wird dieser Testmodus im Fehlerfall (falsche Ansteuerung oder defekte Überwachung) nur von einem der Überwachungsmeßsysteme aktiviert, dann meldet die Sicherheitsschaltung den Störzustand durch sofortige Abschaltung der Antriebsenergie.

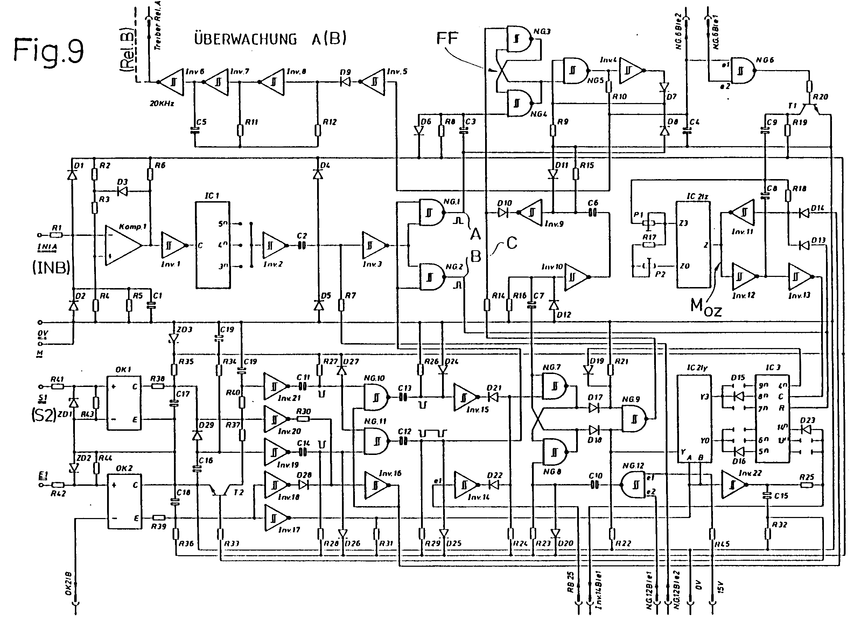

Im folgenden wird noch anhand der Darstellung der Figuren 8 und 9 die interne Struktur- bzw. Funktionsbeschreibung eines der Überwachungsmeßsysteme angegeben, von denen für einen Achskreis jeweils zwei vorgesehen sind - es versteht sich, daß diese nachfolgende Erläuterung nur ein spezielles Ausführungsbeispiel angibt und die Erfindung auf dieses keinesfalls beschränkt ist; insbesondere ist es möglich, diese Schaltung oder Teile dieser Schaltung auch in Verbindung mit Rechnern oder Mikroprozessoren, dann gegebenenfalls als Teil einer Programmierung, zu realisieren.

Zum besseren Verständnis werden im folgenden noch einige der häufiger auftretenden Kurzbezeichnungen und Bezugnummern wiedergegeben. Die Ausgangs-Treiberstufen TRA bzw. TRB entsprechend Fig. 8 arbeiten auf die Ausgangsrelais RelA und RelB, die dann ihrerseits über ihre Kontakte die eigentlichen Abschaltschütze KA bzw. KB in Reihenschaltung in der Stromzuführung zum Leitungsteil 13 der Zielanlage 10 schalten, wie dies auch der Darstellung der Fig. 1 entnommen werden kann. Es bedeuten:

| IN | Encodersignal |
|---|---|
| 13/14 | Ansteuerung Antriebsschütz KA |
| 23/24 | Ansteuerung Antriebsschütz KB |
| S/S' | Schutzhauben-/Türkreis |
| E/E' | Zustimmkreis |
| A1/A2 | Betriebsspannung |

### Eingangssignale der Encoder

Durch den Komparator Komp1 wird das anstehende Signal (Fig. 9) am Geräteeingang INA des Drehgebers vom TTL-Pegel an das interne Spannungsniveau angepaßt. Bei entsprechender Bauteildimensionierung wird ein Frequenzbereich bis zu 200 KHz erreicht.

Weitergehend wird das Ausgangssignal des Komparators durch den Inverter Inv1 (alle die in der Schaltung verwendeten Inverter haben Eingänge mit Schmitt-Trigger-Verhalten) an den Teiler IC1 zugeführt. Das Teilungsverhältnis kann durch entsprechende Bestückung eines Jumpers (3ⁿ, 4ⁿ, 5ⁿ) an verschiedene Frequenzbereiche des Drehgebers angepaßt werden.

Mit den Invertern Inv2 und Inv3, dem Kondensator C2 und dem Widerstand R7 wird das durch den Teiler vorhandene frequenzgeteilte Signal so geformt, daß immer bei abfallender Flanke ein positiver Impuls an den Ausgängen der NAND-Gatter NG1 und NG2 von ca. 10 µs entsteht. Das Ausgangssignal von NAND-Gatter NG2 wird als Triggersignal B für einen Meßoszillator Moz über Diode D13, das von NAND-Gatter NG1 als Triggersignal "A" für den Flip-Flop FF aus NAND-Gatter NG3 und NAND-Gatter NG4 verwendet. Ebenso steht das Referenztriggersignal "C" des Meßoszillators Moz über dem Widerstand R14 einem Flip-Flop FF zur Verfügung.

Wird wie weiter unten beschrieben kein Referenztriggersignal "C" über dem Widerstand R14 mehr zur Verfügung gestellt, wird der Flip-Flop FF nur noch über das Triggersignal "A" angesteuert. Das Ausgangssignal von NAND-Gatter NG4 sowie die Triggerung über Diode D8 hat eine Ausgangsänderung an NAND-Gatter NG5 zur Folge. Damit der Zustand immer erhalten bleibt, wird über den Inverter Inv4 und die Diode D7 dieses gespeichert. Diese Speicherung kann erst bei einem erneuten Referenztriggerimpuls "C" gelöscht werden. Durch die Ausgangsänderung an NAND-Gatter NG5 wird über den Widerstand R10 und das NAND-Gatter NG6 die Hysterese der Meßoszillatoren beider Überwachungen (wie erwähnt liegt die Schaltung der Fig. 4 doppelt vor) aktiviert und somit folgende Wirkungen erzielt:

Die Frequenzen beider Meßoszillatoren werden um ca. 10 % verkleinert. Dadurch wird der Überwachung "B" die Möglichkeit gegeben, ebenfalls wie zuvor beschrieben seinen Ausgangszustand zu ändern.

Weiterhin wird das Ausgangssignal über Widerstand R10 an Inverter Inv5 und Diode D9 einem Treibergenerator TG zugeführt. Der Treibergenerator TG,bestehend aus den Invertern Inv6 und Inv7 und Inv8 sowie dem Kondensator C5 und den Widerständen R11 und R12, wird dadurch gestoppt. Durch eine dynamische Ansteuerung (s. Fig. 3) bestehend aus den Widerständen R50 und R51, dem Transistor T3, dem Übertrager Ü1, den Zenerdioden ZD5 und ZD6 sowie den Dioden D40, D41 und D42 und dem abschließenden Kondensator C20 wird die Energieversorgung des Ausgangsrelais RelA bzw. RelB eingestellt. Um zu verhindern, daß dabei das Ausgangsrelais in seine Ruhelage zurückfällt, wird über den Kondensator C20 die Relaisspulenspannung für ca. 25 ms gespeichert, wie schon erwähnt. Der energielose Zustand wird allerdings über einen Optokoppler OK3 an das Gatter NG12 gemeldet und kann, wenn die Überwachung im B-Meßsystembereich den selben Zustand einnimmt, über den Ausgang des NAND-Gatters NG12 durch das NAND-Gatter NG8 die Testrampe quittieren. Durch den Quittierungsvorgang wird über die Inverter Inv9 und Inv10, die Widerstände R15 und R16 sowie die Diode D10 und die Kondensatoren C6 und C7 ein Impuls erzeugt, der die Speicherung des NAND-Gatters Ng5 und des Inverters Inv4 löscht. Dabei wird über den Treibergenerator an die dynamische Ansteuerung des Ausgangsrelais Rel wieder Energie zugeführt. Zudem kann dann die eigentliche Meßfrequenz (Referenztriggersignal "C") von der integrierten Schaltung IC3 - Ausgang 4ⁿ - über die Diode D19 sowie das NAND-Gatter NG9 und den Widerstand R14 am Flip-Flop wirksam werden. Bei erneutem Ausbleiben des Referenztriggersignals C über dem Widerstand R14 wird wiederum der Treibergenerator wie zuvor gestoppt. Die Energiezuführung für das Ausgangsrelais Rel wird erneut eingestellt. Dieser Zustand bleibt, solange die Versorgungsspannung der Überwachung ansteht, erhalten.

### Aufbau und Funktion des Meßoszillators

Durch die Inverter Inv11, Inv12 und Inv13 wird über einen elektronischen Schalter IC2/z, dessen Anschluß Z3/Z mit dem Kondensator C8, dem Widerstand R18 und dem Poti P1 der schon erwähnte Meßoszillator Moz gebildet. Mit den Bauteilen Kondensator C9, Widerstände R19 und R20 sowie dem Transistor T1 wird ein geringfügiger Einfluß auf die Frequenz des Meßoszillators ausgeübt (Hysterese). Zudem kann durch die Zustimmtaste 25 am Geräteeingang E1 über den Optokoppler OK2 (siehe Fig. 8) sowie den Inverter Inv17 der elektronische Schalter IC2/y, dessen Anschluß A/B (siehe Fig. 4 - auch auf IC2/z wirkend) eine Meßfrequenzänderung des Oszillators über den Steller P2 und den Widerstand R17 erreicht werden. Weiterhin kann durch das Überwachungssignal am Geräteeingang S1 über den Optokoppler OK2 sowie die Inverter Inv18 und Inv16 und die Diode D14 der Meßoszillator gestoppt werden. Durch diese Maßnahme entstehen drei verschiedene Meßfrequenzen des Oszillators:
a) Meßfrequenz für die Drehbewegungsüberwachung (Normalbetrieb)
b) Meßfrequenz für die Kriechbewegungsüberwachung (Sonderbetrieb mit Bewegungen)
c) Meßfrequenz für die Kriechbewegungsüberwachung (Sonderbetrieb ohne Bewegungen)

Das Ausgangssignal des Meßoszillators am Inverter Inv13 wird dem Teiler IC3, dessen Anschluß C zugeführt. Durch den Teiler IC3 werden wiederum verschiedene Meßfrequenzen erzeugt, die durch entsprechende Bestückung der Dioden D15, D16 und D23 festgelegt werden. Durch den elektronischen Schalter IC2/y wird je nach Einwirkung durch die Zustimmtaste am Geräteeingang E1 aus den beiden anliegenden Meßfrequenzen vom IC3 über die Anschlüsse Y0/Y3 eine entsprechende Testrampenfrequenz über den Ausgangsanschluß Y ausgewählt. Die eigentliche Meßfrequenz der Schaltung IC3, deren Anschluß 4ⁿ sowie die Testrampenfrequenz werden dem NAND-Gatter NG9 zugeführt und steht somit vom Ausgang des NAND-Gatters NG9 und über den Widerstand R14 dem Flip-Flop FF als Referenztriggersignal "C" zur Triggerung zur Verfügung. Über die NAND-Gatter NG7 und NG8 sowie die Dioden D17 und D18 wird die entsprechende Frequenz über den Ausgang des NAND-Gatters NG9 festgesetzt. Dies geschieht automatisch über die Schaltung IC3, die Diode D23 und den Inverter 22 aus der Überwachung des Schaltungsbereichs B sowie über den Inverter 14 und die Diode D22 aus der Überwachung des Schaltungsbereichs A oder manuell über den Inverter 15 und die Diode D21.

Durch den Triggerimpuls "B" wird über die Diode D13 und die Schaltung IC3, deren Anschluß R der Meßoszillator Moz und der Teiler immer neu gestartet. Ist die Periodendauer des Triggerimpulses kleiner als die am Schalter IC3 anliegende Meßfrequenz, deren Anschluß C, dann kann, daraus folgend, am Ausgang des NAND-Gatters NG9 kein Referenztriggersignal "C" für den Flip-Flop FF entstehen.

### Die Eingangssignale des Überwachungskreises

Durch den Optokoppler OK1 (Fig. 4 linke Seite unten) werden beim Entstehen eines Signales am Geräteeingang S1 über die Inverter Inv19 und Inv21, die Diode D29, den Kondensator C16 und den Widerstand R40 zwei Impulse im Abstand von 100 ms erzeugt. Zudem wird die Geräteeingangsinformation über den Inverter Inv20 an den Meßoszillator und Teiler geführt. Durch diesen Vorgang werden diese gestoppt, um die Erzeugung eines Referenztriggersignals "C" am Gatterausgang des NAND-Gatters NG9 zu verhindern. Die erzeugten Impulse werden über die Kondensatoren C11 und C12, das NAND-Gatter NG11, den Kondensator C12 und das NAND-Gatter NG1 als Triggersignal "A" an den Flip-Flop geführt. Da kein Referenztriggersignal "C" über den Widerstand R14 zur Verfügung steht, wird der Flip-Flop nur noch über das Triggersignal "A" angesteuert. Der Ausgangszustand des NAND-Gatters NG4 sowie die Triggerung über die Diode D8 hat eine Ausgangsänderung am NAND-Gatter NG5 zur Folge. Damit der Zustand immer erhalten bleibt, wird dieser über den Inverter Inv4 und die Diode D7 gespeichert. Weiterhin wird dieser Ausgangszustand über den Widerstand R10 am Inverter Inv4 und die Diode D9 dem Treibergenerator zugeführt; dieser wird ebenfalls dadurch gestoppt. Durch die dynamische Ansteuerung wird die Energieversorgung des Ausgangsrelais Rel eingestellt. Der energielose Zustand wird über den Optokoppler OK3 an das NAND-Gatter Ng12 gemeldet und kann, wenn die Überwachung im Bereich B den selben Zustand einnimmt, über den Ausgang des NAND-Gatters NG12 am NAND-Gatter NG8 die Testrampe quittieren. Durch den Quittierungsvorgang wird ein Impuls erzeugt, wie schon erwähnt, der die Speicherung des NAND-Gatters NG5 und Inverters Inv4 löscht. Dadurch wird über den Treibergenerator TG an den dynamischen Ansteuerungsbereich für das Ausgangsrelais Rel wieder Energie zugeführt. Bei erneutem Auftreten eines Triggersignals "A" wird wiederum der Treibergenerator wie zuvor gestoppt. Die Energiezuführung für das Ausgangsrelais Rel wird erneut eingestellt. Dieser Zustand bleibt, solange die Versorgungsspannung der Überwachung ansteht, erhalten. Das Erzeugen der Impulse über die Geräteeingänge S1 und S2 muß innerhalb 20 ms, bedingt durch die Ausgangsrelaisrückfallverzögerung, geschehen. Damit der beschriebene Vorgang auch bei Signaländerung am Geräteeingang E1 stattfinden kann, wird die Impulserzeugung über den Inverter Inv22, den Kondensator C15, den Widerstand R33 und den Transistor T2 neu gestartet.

Bei Entstehung eines Signals am Geräteeingang E1 wird über den Inverter Inv18, die Diode D28, den Inverter Inv16, das NAND-Gatter NG10 und den Kondensator C13 ein Impuls am Inverter Inv15 erzeugt. Dieser dient zum Setzen der Testrampe über das NAND-Gatter NG7 und die Diode D17 am NAND-Gatter NG9.

Das automatische Setzen der Testrampe wird nur bei Drehbewegungüberwachung durchgeführt. Steht ein Signal von der Schaltung IC3 über der Diode D23 aus der Überwachung des Bereichs B zur Verfügung, dann wird über den Inverter Inv14 und die Diode D22 die Testrampe gesetzt. Das Signal kann nur bei Pausezeiten des Triggersignals "C" von >150 ms entstehen.

Der Stillstands-und Drehbewegungsüberwachungsschaltung wird über die Anschlußklemmen A1 und A2 die Versorgungsspannung zugeführt. Nach dem Brückengleichrichter BN1 wird die Spannung den dynamischen Ansteuerungsbereichen der Ausgangsrelais RelA und RelB zur Verfügung gestellt. Ebenso wird über den Festspannungsregler ICN1 (Fig. 3) die stabilisierte Spannung für die Elektroniken der Überwachungsbereiche A und B zugeführt. Schließlich ist noch darauf hinzuweisen, daß sich die Funktion an dem diesem Achskreis zugeordneten Überwachungsmeßsystem von der beschriebenen nur dadurch unterscheidet, daß am Eingang eine Frequenzteilung entfallen kann, wenn das zweite Drehsignal als Signal L anfällt.

Es können alle in der Beschreibung, den Ansprüchen und der Zeichnung dargestellten Merkmale sowohl einzeln für sich als auch in beliebiger Kombination miteinander erfindungswesentlich sein. Insbesondere ist der Hauptanspruch ein provisorischer Formulierungsversuch **ohne** Kenntnis des Stands der Technik, der erst durch eine Amtsrecherche ermittelt werden soll. Der Anmelder behält sich auch Merkmalsreduzierungen im Hauptanspruch vor.

## Patentansprüche

1. Vorrichtung zur Sicherheitsüberwachung bei Schutzeinrichtungen mit normaler oder überhöhter Sicherheit von mehrachsig Drehbewegungen durchführenden Maschinen (Zielanlage), mit Abschaltschützen (KA, KB) im Stromversorgungsbereich der Maschine sowie ferner mit einem ersten den Zustand der Maschine angebenden Überwachungsteilkreis (Türkontakt) und einem zweiten Überwachungsteilkreis als manuell betätigbaren Zustimmkontaktkreis, gekennzeichnet durch
a) ein Grundgerät, bestehend aus einer Stromversorgungseinheit (EBKS) und einer Kontrolleinheit (EBKC), wobei die Stromversorgungseinheit (EBKS) mit den Signalen der Überwachungskreise und die Kontrolleinheit (EBKC) mit mindestens einem redundanten Achskreissignal (IN, L) der Maschine beaufschlagt ist;
b) getrennte Teilgehäuse (35a, 35b) für Stromversorgungseinheit (EBKS) und Kontrolleinheit (EBKC), die an angrenzenden Seiten (jeweils unterschiedliche) Steckkontaktmittel (31a, 31b) zur Herstellung einer elektrischen Verbindung und einer mechanischen Aneinanderreihung aufweisen;
c) zusätzliche jeweils ebenfalls mindestens mit einem redundanten Achskreissignal beaufschlagte Achskreis-Ergänzungsüberwachungseinheiten (EBKU), jeweils ebenfalls mit eigenen Teilgehäusen (36), die so ausgebildet sind, daß
d) diese zusätzlichen Überwachungs-Ergänzungseinheiten (EBKU), die in ihrer Anzahl auf die Anzahl der Achskreise der jeweils zu überwachenden Maschine abgestimmt sind, zwischen die Teilgehäuse (35a, 35b) von Stromversorgungseinheit und Kontrolleinheit steckbar und anreihbar sind, ebenfalls ausgerüstet mit beidseitigen, einmal zur Stromversorgungseinheit (EBKS) und andererseits entweder zu weiteren Überwachungsergänzungseinheiten(EBKU) oder abschließend zur Kontrolleinheit (EBKC) gerichteten Kontaktmitteln (31a', 31b').

2. Vorrichtung nach Anspruch 1, dadurch gekennzeichnet, daß die Kontaktmittel jeweils gerichtet Buchsenanschlüsse (31a, 31a') und Stiftkontaktanschlüsse (31b, 31b') umfassen, derart, daß die einzelnen Teilgehäuse des Grundgeräts mit Stromversorgungseinheit (EBKS) und Kontrolleinheit (EBKC) sowie die jeweils vorgesehenen Teilgehäuse (36) der Überwachungsergänzungseinheiten (EBKU) gerichtet in drahtloser Steckmodulmontage aneinander anreihbar sind.

3. Vorrichtung nach Anspruch 1 oder 2, dadurch gekennzeichnet, daß jedes Teilgehäuse (35a, 35b; 36) der einzelnen Einheiten zusätzlich zu den ihre jeweilige elektrische Zuordnung und Verbindung ermöglichenden Kontaktmitteln außen Klemmanschlüsse aufweist zur Verbindung mit äußeren Drehbewegungssensoren, Stromanschlüssen bzw. Schützansteuerungen.

4. Vorrichtung nach einem der Ansprüche 1-3, dadurch gekennzeichnet, daß die einzelnen Kontaktmittel (31a, 31b; 31a', 31b') sowohl der Stromversorgungseinheit als auch der Kontrolleinheit des Grundgeräts sowie der Überwachungsergänzungseinheiten (EBKU) interne Querverbindungsleitungen (30) aufweisen, die jeweils zu den äußeren Kontaktmitteln führen und an die mindestens die Ausgangsanschlüsse der einzelnen Achsüberwachungs-Meßsysteme zur Auslösung der Abschaltschütze (KA, KB) im Fehlerfall parallel angeschlossen sind.

5. Vorrichtung nach einem der Ansprüche 1-4 zur Durchführung von drei verschiedenen Funktionsarten, die durch den jeweiligen Betriebszustand der Zielanlage extern bestimmt sind,
a) einer Stillstandsüberwachung als Sonderbetrieb ohne Bewegung, wobei der Betriebszustand der Zielanlage einer geöffneten Gefahrenzone (Schutzhaube, Schutzgitter) entspricht,
b) einer Stillstandsüberwachung als Sonderbetrieb mit Bewegung bei ebenfalls geöffneter Gefahrenzone und manueller Anforderung zur Zulassung einer limitierten Kriechbewegung der Zielanlage sowie schließlich
c) einer Drehbewegungsüberwachung als Normalbetrieb bei geschlossener Gefahrenzone, wobei eine limitierte Drehbewegung an der Zielanlage zugelassen ist,
gekennzeichnet durch einen externen Überwachungskreis (23) mit mindestens einem Türkontaktkreis (24a) und einem von einer Bedienungsperson manuell betätigbaren Zustimmkontaktkreis (25), deren einen entsprechenden Betriebszustand (Funktion Stillstandsüberwachung als Sonderbetrieb ohne Bewegung - Funktion Stillstandsüberwachung als Sonderbetrieb mit Bewegung - Funktion Drehbewegungsüberwachung als Normalbetrieb) angebende Ausgangssignale der Stromversorgungseinheit, auch zur Weiterleitung an die jeweiligen Achskreis-Überwachungsmeßsysteme (MA, MB) zugeführt sind und die jeweilige Schutzfunktionsart bestimmen, wobei jedes Achskreis-Überwachungsmeßsystem mindestens einen eine Drehbewegung bei der Zielanlage erfassenden Bewegungssensor (Encoder 15) umfaßt.

6. Vorrichtung nach Anspruch 5, dadurch gekennzeichnet, daß zusätzlich zu dem vom äußeren Bewegungs-Encoder (15) gelieferten Drehbewegungssignal jedes Achskreises ein redundantes Ansteuersignal (L) dem Leistungskreis (13) jedes Antriebsmotors (14) entnommen ist und beide relevante Drehbewegungssignale auf getrennten Kanälen ausgewertet werden.

7. Vorrichtung nach einem der Ansprüche 1-6, dadurch gekennzeichnet, daß das Stecksystem zur lückenlosen Anreihung der einzelnen Teilgehäuse von Stromversorgungseinheit, zwischengeschalteten Überwachungsergänzungseinheiten und Kontrolleinheit so ausgebildet ist, daß ein falsches Anreihen der Einheiten oder Offenlassen von Steckkontakten (z. B. bei fehlender Abschlußkontrolleinheit) ausgeschlossen ist bzw. zur Fehlerauslösung führt.

8. Vorrichtung nach einem der Ansprüche 1-7, dadurch gekennzeichnet, daß die Stromversorgungseinheit (EBKS) die Spannungsversorgung für das gesamte Überwachungssystem durchführt, ferner die globalen Signale des externen Überwachungskreises zur Bestimmung der einzelnen Betriebszustände entsprechend bearbeitet und in bidirektionaler Korrespondenz den einzelnen Überwachungsmeßsystemen für die Kriech- und Drehüberwachung zuführt sowie die Summe der von diesen Meßsystemen gelieferten Kriech- und Drehbewegungsauswertungen über ein Sicherheitsausgangsrelaissystem der nachfolgenden, extern angeschlossenen Abschaltschutzsteuerung zuführt, wobei die Auswertung und Verarbeitung sämtlicher Signale in eigensicherer "Fail-Safe-Technik" erfolgt.

## Claims

1. Apparatus for safety monitoring in safety devices having normal or increased safety, of machines performing rotary movements multiaxially (target system), having switch-off contactors (KA, KB) in the power supply region of the machine, and furthermore having a first monitoring subcircuit (door contact) indicating the status of the machine, and a second monitoring subcircuit in the form of a manually actuable confirmation contact circuit, characterized by
a) a basic unit comprising a power supply unit (EBKS) and a checking unit (EBKC), the power supply unit (EBKS) being acted upon by the signals of the monitoring circuits and the checking unit (EBKC) being acted upon by at least one redundant axis circle signal (IN, L) of the machine;
b) separate subhousings (35a, 35b) for power supply unit (EBKS) and checking unit (EBKC), which, to establish an electrical connection and a mechanical side-by-side arrangement, have on adjacent sides (in each case different) plug contact means (31a, 31b);
c) additional axis circle supplementary monitoring units (EBKU) which are in each case also acted upon at least by one redundant axis circle signal and which in each case also have separate subhousings (36) which are constructed such that
d) these additional monitoring supplementary units (EBKU), whereof the number is matched to the number of axis circles of the machine which is respectively to be monitored, can be inserted and arranged side by side between the subhousings (35a, 35b) of the power supply unit and the checking unit, similarly equipped on both sides with contact means (31a', 31b') which are directed on the one hand towards the power supply unit (EBKS) and on the other hand either towards further monitoring supplementary units (EBKU) or, in terminating manner, towards the checking unit (EBKC).

2. Apparatus according to Claim 1, characterized in that the contact means each include, in directional manner, socket connections (31a, 31a') and pin contact connections (31b, 31b') in such a way that the individual subhousings of the basic unit with power supply unit (EBKS) and checking unit (EBKC) and the respectively provided subhousings (36) of the monitoring supplementary units (EBKU) can be arranged side by side with respect to one another, in directional manner, in a wireless plug module mounting arrangement.

3. Apparatus according to Claim 1 or 2, characterized in that each subhousing (35a, 35b; 36) of the individual units has, in addition to the contact means enabling their respective electrical assignment and connection to be made, terminal connections on the outside for connection to external rotary movement sensors, current connections or contactor triggering means.

4. Apparatus according to one of Claims 1-3, characterized in that the individual contact means (31a, 31b; 31a', 31b') of both the power supply unit and the checking unit of the basic unit and of the monitoring supplementary units (EKBU) have internal transverse connection lines (30), which each lead to the external contact means and to which at least the output connections of the individual axis monitoring measurement systems are connected in parallel for triggering the switch-off contactors (KA, KB) in the event of a fault.

5. Apparatus according to one of Claims 1-4 for carrying out three different types of function which are determined externally by the respective operating state of the target system,
a) a standstill monitoring, in the form of a special mode without movement, the operating state of the target system corresponding to an opened danger zone (protective hood, protective grille),
b) a standstill monitoring, in the form of a special mode with movement, again with the danger zone open, and with manual request to permit a limited creep movement of the target system, and finally
c) a rotary movement monitoring, in the form of a normal mode with the danger zone closed, a limited rotary movement being permitted in the target system,
characterized by an external monitoring circuit (23) having at least one door contact circuit (24a) and a confirmation contact circuit (25) which is manually actuable by operating staff, whereof the output signals specifying an appropriate operating state (standstill monitoring in the form of a special mode without movement function - standstill monitoring in the form of a special mode with movement function - rotary movement monitoring in the form of normal mode function) are supplied to the power supply unit, also for passing on to the respective axis circle monitoring measurement systems (MA, MB), and determine the respective protective function type, each axis circle monitoring measurement system including at least one movement sensor (encoder 15) detecting a rotary movement in the target system.

6. Apparatus according to Claim 5, characterized in that in addition to the rotary movement signal of each axis circle delivered from the external movement encoder (15) a redundant triggering signal (L) is derived from the power circuit (13) of each driving motor (14), and both relevant rotary movement signals are evaluated on separate channels.

7. Apparatus according to one of Claims 1-6, characterized in that the plug system for gap-free side-by-side arrangement of the individual subhousings of the power supply unit, intermediate monitoring supplementary units and checking unit is constructed such that incorrect side-by-side arrangement of the units or leaving unconnected plug contacts (e.g. in the event of the terminating checking unit being missing) is eliminated or results in the triggering of a fault signal.

8. Apparatus according to one of Claims 1-7, characterized in that the power supply unit (EBKS) supplies the voltage for the entire monitoring system, furthermore appropriately processes the global signals of the external monitoring circuit for the purpose of determining the individual operating states, and supplies them, in a two-directional correspondence, to the individual monitoring measurement systems for the monitoring of creep and rotation, and supplies the sum of the creep and rotary movement evaluations delivered by these measurement systems by way of a safety output relay system to the downstream, externally connected switch-off protection control, all the signals being evaluated and processed in the intrinsically safe "fail-safe technique".

## Revendications

1. Dispositif de surveillance de la sécurité pour des installations de protection à sécurité normale ou élevée pour des machines (installation de destination) exécutant des mouvements de rotation autour de plusieurs axes, comprenant des moyens de protection par coupure (KA, KB) de l'alimentation électrique de la machine ainsi qu'un premier circuit partiel de surveillance (contact de porte) donnant l'état de la machine et un second circuit partiel de surveillance comme circuit de contact d'accord actionné manuellement, dispositif caractérisé en ce que :
a) un appareil de base composé d'une unité d'alimentation électrique (EBKS) et d'une unité de contrôle (EBKC), l'unité d'alimentation (EBKS) recevant les signaux des circuits de surveillance et l'unité de contrôle (EBKC) recevant au moins un signal d'axe de rotation (IN, L), redondant de la machine ;
b) des parties distinctes de boîtier (35a, 35b) pour l'unité d'alimentation électrique (EBKS) et l'unité de contrôle (EBKC) qui présente sur les côtés adjacents (chaque fois différents) des moyens de contact par enfichage (31a, 31b) pour réaliser une liaison électrique et une juxtaposition mécanique ;
c) en outre, chaque fois également des unités de surveillance complémentaires de cercle d'axe (EBKU) recevant au moins un signal redondant de cercle d'axe, avec chaque fois également une partie de boîtier (36) ainsi réalisée pour que :
d) ces unités complémentaires de surveillance supplémentaires (EBKU) dont le nombre correspond au nombre des cercles d'axes de la machine à surveiller, peuvent être enfichées et mises en série entre les parties de boîtier (35a, 35b) de l'unité d'alimentation électrique et de l'unité de contrôle, en étant également équipées des deux côtés de moyens de contact (31a', 31b') dirigés, d'une part, vers l'unité d'alimentation électrique (EBKS) et, d'autre part, soit vers d'autres unités complémentaires de surveillance (EBKU) soit, enfin, à l'unité de contrôle (EBKC).

2. Dispositif selon la revendication 1, caractérisé en ce que les moyens de contact comprennent des douilles de raccordement (31a, 31a') chaque fois dirigées ainsi que des broches de contact (31b, 31b'), les différentes parties de boîtier de l'appareil de base étant juxtaposées avec l'unité d'alimentation électrique (EBKS) et l'unité de contrôle (EBKC) ainsi que les parties de boîtier (36) chaque fois prévues pour les unités complémentaires de surveillance (EBKU) suivant un montage modulaire enfichable sans fil.

3. Dispositif selon la revendication 1 ou 2, caractérisé en ce que chaque partie de boîtier (35a, 35b ; 36) des différentes unités comporte en plus des moyens de contact permettant l'association électrique respective et la liaison, des bornes de raccordement extérieures pour être reliées à des capteurs de mouvements de rotation extérieurs, les branchements de courant ou des commandes de protection.

4. Dispositif selon l'une des revendications 1 à 3, caractérisé en ce que les différents moyens de contact (31a, 31b ; 31a', 31b') ainsi que l'unité d'alimentation électrique et l'unité de contrôle de l'appareil de base ainsi que les unités complémentaires de surveillance (EBKU) comportent des lignes de liaison transversales internes (30) conduisant chaque fois aux moyens de contact externes et auxquels sont reliées au moins les bornes de sortie des différents systèmes de mesure de surveillance d'axes pour déclencher les protections de coupure (KA, KB) en cas d'incident, suivant un branchement parallèle.

5. Dispositif selon l'une des revendications 1 à 4, pour la mise en oeuvre de trois modes de fonctionnement différents définis par l'état de fonctionnement respectif, externe, de l'installation de destination,
a) une surveillance de repos comme fonctionnement particulier sans mouvement, l'état de fonctionnement de l'installation de destination correspondant à une zone de danger, ouverte (capot protecteur, grille de protection),
b) une surveillance d'arrêt comme fonctionnement particulier avec mouvement lorsque la zone de danger est également ouverte et demande manuelle d'autorisation d'un mouvement lent, limité, de l'installation de destination ainsi que finalement
c) une surveillance de mouvement de rotation comme fonctionnement normal lorsque la zone de danger est fermée, un mouvement de rotation limité sur l'installation de destination étant autorisé,
dispositif caractérisé par un circuit de surveillance externe (23) avec au moins un circuit de contact de porte (24a) et au moins un circuit de contact d'accord (25) actionné manuellement par un utilisateur, auxquels sont appliqués des signaux de sortie de l'unité d'alimentation électrique correspondant à l'état de fonctionnement (fonction de surveillance de l'arrêt comme fonctionnement particulier sans mouvement - fonction de surveillance de l'arrêt comme mode de fonctionnement particulier avec mouvement - fonction de surveillance du mouvement de rotation comme fonctionnement normal) ainsi que pour être transmis au système de mesure et de surveillance de cercles d'axes respectifs (MA, MB) qui définissent le mode de fonctionnement respectif, chaque système de mesure de surveillance de cercles d'axes comprenant au moins un capteur de mouvement (codeur 15) détectant un mouvement de rotation de l'installation de destination.

6. Dispositif selon la revendication 5, caractérisé en ce qu'en plus du signal de mouvement de rotation fourni par le codeur de mouvement extérieur (15) pour chaque cercle d'axe, un signal de commande (L), redondant, est pris dans le circuit de puissance (13) de chaque moteur (14) et les deux signaux de mouvement de rotation, caractéristiques, sont exploités par des canaux séparés.

7. Dispositif selon l'une des revendications 1 à 6, caractérisé en ce que le système d'enfichage pour la juxtaposition sans intervalle des différentes parties de boîtier de l'unité d'alimentation électrique, des unités complémentaires de surveillance, disposé de manière intermédiaire et de l'unité de contrôle, est réalisé pour qu'une mauvaise juxtaposition des unités ou l'ouverture des contacts d'enfichage (par exemple lorsqu'il manque une unité de contrôle de fermeture) soit impossible ou conduise à un déclenchement d'erreur.

8. Dispositif selon l'une des revendications 1 à 7, caractérisé en ce que l'unité d'alimentation électrique (EBKS) assure l'alimentation en tension de l'ensemble du système de surveillance et, de plus, traite les signaux globaux du circuit de surveillance externe pour déterminer les différents états de fonctionnement et, selon une correspondance bidirectionnelle, fournit aux différents systèmes de mesure de surveillance pour la surveillance de mouvement lents et de rotation, ainsi que la somme des mesures de course de mouvement lent et de rotation donnée par ces systèmes de mesure, par un système de relais de sortie de sécurité à la commande de coupure externe, raccordé, suivante, par un système de relais de sortie de sécurité, l'exploitation et le traitement de tous les signaux se faisant selon une technique de sécurité propre en technique "Fail-Safe".
